# EUROPEAN PATENT APPLICATION

(11) **EP 3 904 610 A1**
(43) Date of publication of application: **03.11.2021**
(21) Application number: 20752535.3
(22) Date of filing: 22.01.2020
(51) Int. Cl.: E02F 9/24, E02F 9/26

(54) **CONSTRUCTION MACHINE**

(30) Priority: 08.02.2019 JP 2019021349
(71) Applicant: KOBELCO CONSTRUCTION MACHINERY CO., LTD., Hiroshima-shi Hiroshima 731-5161 (JP)
(72) Inventor: YOKOTA, Jumpei, Saeki-ku, Hiroshima-shi, Hiroshima 731-5161 (JP); FUJIWARA, Yusuke, Saeki-ku, Hiroshima-shi, Hiroshima 731-5161 (JP)
(74) Representative: TBK
(86) International application number: PCT/JP2020/002189
(87) International publication number: WO 2020/162184

(57) **Abstract**

Provided is a construction machine (1) capable of accurately notifying a worker that a prime mover is in a drive state. The construction machine (1) includes a prime mover (5), a heat exchanger (6), a fan (7) that blows air to the heat exchanger, a controller (9), and notification units (8A, 8B). Only when all of a plurality of notification judgment conditions, which include a condition that the prime mover (5) is in a drive state and a drive sound condition for judging that the drive sound of the fan (7) is low, are satisfied, the controller (9) inputs a notification instruction to the notification units (8A, 8B). With input of the notification instruction, the notification units (8A, 8B) perform notification that the prime mover (5) is in a drive state.

## Description

### Technical Field

The present invention relates to a construction machine including a prime mover and a fan.

### Background Art

There has been proposed a construction machine that has a function of informing an operator of the presence of an obstacle and the approach of a person (peripheral worker) and a function of warning an operator in the periphery of the machine that he enters a monitoring area (Patent Document 1).

On the other hand, has been proposed a cooling fan control device that controls the number of revolutions of a cooling fan in response to the ambient temperature in an engine room to keep the temperature in the engine room substantially equal to or lower than a preset temperature (Patent Document 2).

The construction machine described in Patent Document 1, issuing an alarm even when the construction machine is in a standby state with no possibility of moving, causes the operator to have to keep a distance from the construction machine even in a situation with no need for being cautious. This involves an unnecessary reduction in the efficiency of work around the machine.

On the other hand, many workers judge whether or not the engine is being driven depending on the presence or absence of drive sound of a fan that generates a relatively large volume sound out of the equipment mounted on the construction machine. For example, an operator in the cab judges that the engine is in a drive state based on the recognition of the fan's drive sound and refrains from inadvertently operating the operating lever. Besides, a worker around the machine refrains from approaching the construction machine when recognizing the drive sound of the fan.

However, for example, the fan control device as described in Patent Literature 2, which reduces the number of revolutions of the fan (or stopping the fan) in response to the temperature condition of the cooler or the like, may hinder a worker from recognizing the possibility of the operation of the construction machine based on the drive sound of the fan. Besides, in a work site or the like where large noise is likely to occur, the noise may drown the drive sound of the fan to thereby inhibit a worker from recognizing the drive sound of the fan. These cases involve a possibility of causing an incorrect judgment that the prime mover is being stopped despite that the prime mover is actually operated. For example, an operator in the cab may inadvertently apply an operation to an operation lever with a recognition that the prime mover is stopped despite the prime mover is actually operating. Besides, a worker around the machine may inadvertently approach the machine with a recognition that the prime mover is stopped.

### Citation List

### Patent Literature

Patent Literature 1: Japanese Unexamined Patent Publication No. Hei 7-102596
Patent Literature 2: Japanese Unexamined Patent Publication No. Hei 11-158917

### Summary of Invention

An object of the present invention is to provide a construction machine including a prime mover and a fan, the construction machine being capable of accurately notifying a worker that the prime mover is in a drive state.

Provided is a construction machine comprising: a prime mover; a heat exchanger; a fan that is rotationally driven to blow air to the heat exchanger; at least one notification unit that is operated to notify that the prime mover is in a drive state by input of a notification instruction to the at least one notification unit; and a controller that inputs the notification instruction to the at least one notification unit only when all of a plurality of preset notification judgment conditions are satisfied. The plurality of notification judgment conditions include a prime mover drive condition that the prime mover is in a drive state and a fan drive sound condition that is preset to judge that a volume of a drive sound generated by driving the fan is small.

### Brief Description of Drawings

FIG. 1 is a plan view showing the arrangement of devices in an upper turning body of a hydraulic excavator according to respective embodiments of the present invention;
FIG. 2 is a block diagram showing a configuration of a controller according to a first embodiment of the present invention;
FIG. 3 is a flowchart showing a process performed by the controller according to the first embodiment;
FIG. 4 is a flowchart showing a process performed by a controller according to a second embodiment of the present invention;
FIG. 5 is a block diagram showing a configuration of a controller according to a third embodiment of the present invention;
FIG. 6 is a flowchart showing a process performed by the controller according to the third embodiment; and
FIG. 7 is a plan view showing the arrangement of devices in an upper turning body and a monitoring area of a hydraulic excavator according to a modification.

### Description of Embodiments

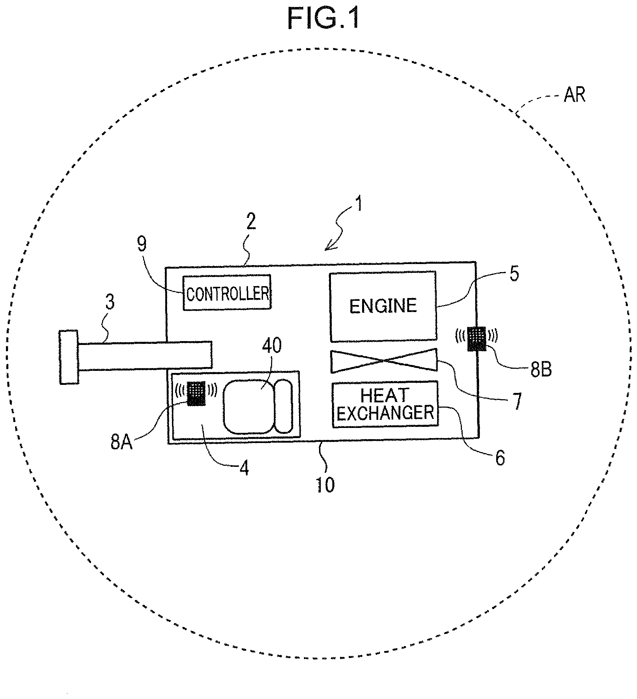

There will be described each of embodiments of the present invention with reference to the drawings. FIG. 1 shows a hydraulic excavator 1 as an example of a construction machine in each of the embodiments.

The hydraulic excavator 1 includes a lower traveling body 10, an upper turning body 2 mounted on the lower traveling body 10 so as to be turnable, and a work attachment 3 attached to the upper turning body 2. In FIG. 1, which is a plan view, the lower traveling body 10 behind the upper turning body 2 is not directly shown.

The upper turning body 2 includes a cab 4, an engine 5, a heat exchanger 6, a fan 7, an internal speaker 8A and an external speaker 8B, each being a notification unit, and a controller 9. The cab 4 is disposed in the front of the upper turning body 2, and includes an operation seat 40 that allows an operator to sit in the operation seat 40 to perform operations. The engine 5, the heat exchanger 6, and the fan 7 are housed in a machine room disposed in the rear of the upper turning body 2. The heat exchanger 6 is disposed in the vicinity of the engine 5. In this embodiment, the heat exchanger 6 is disposed sideward of the engine 5. The fan 7 is disposed between the engine 5 and the heat exchanger 6.

The engine 5 is an example of a prime mover according to the present invention, being, for example, a diesel engine. The heat exchanger 6 cools the refrigerant by exchanging heat between a refrigerant (for example, cooling water) for cooling a cooling object including at least the engine 5 and air, and includes an oil cooler, a radiator, and an intercooler.

The fan 7 is a blower that blows air for cooling to the heat exchanger 6. The fan 7 according to this embodiment is not directly connected to the output shaft of the engine 5 to be directly driven by the engine 5 but configured as an independent fan that is driven by another drive source. The other drive source is, for example, a hydraulic motor or an electric motor. The other drive source may be either completely independent of the engine 5 or driven by supply of power from the engine 5 to the drive source to thereby drive the fan 7. The rotational speed of the fan 7 is controlled, for example, in response to at least one of the outside-air temperature around the machine, the temperature of the hydraulic fluid that is cooled through the heat exchanger 6, and the temperature of cooling water for the engine 5. The control is performed by the controller 9 or a controller other than the controller 9.

The machine room is enclosed with a cover including an opening/closing panel and a bonnet that are not graphically shown, and separated from an operator who sits in the operation seat 40 and a worker around the machine.

The internal and external speakers 8A and 8B notify an operator in the cab 4 and a worker in the periphery of the construction machine, namely, the hydraulic excavator 1 (hereinafter referred to as a "peripheral worker") that the engine 5 is in a drive state. The internal speaker 8A is an internal notification unit that is disposed inside the cab 4 and performs a notification to an operator sitting in the operation seat 40. The external speaker 8B is an external notification unit disposed so as to perform a notification to a peripheral worker outside the upper turning body 2 (outside the machine room).

The controller 9 controls a plurality of machine motions of the hydraulic excavator 1. The machine motions are mechanical motions that the hydraulic excavator 1 performs as a construction machine. The plurality of machine motions include an operation of the work attachment 3, the travel operation of the lower traveling body 10, and the turning operation of the upper turning body 2.

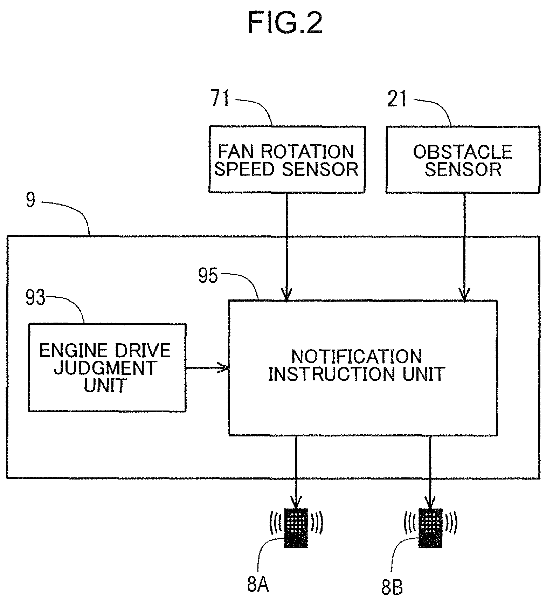

The hydraulic excavator 1 further includes a fan rotation speed sensor 71 and an obstacle sensor 21 shown in FIG. 2.

The fan rotation speed sensor 71 detects the rotational speed (for example, the number of revolutions per unit time) of the fan 7. As shown in FIG. 2, the fan rotation speed sensor 71 inputs a detection signal with respect to the detected rotational speed to the controller 9. The fan rotation speed sensor 71 is an example of a rotational speed detector according to the present invention.

The obstacle sensor 21, composed of a known infrared sensor, a laser sensor or the like, detects an obstacle being present in a monitoring area AR set around the machine as shown in FIG. 1. As shown in FIG. 2, the obstacle sensor 21 inputs a detection signal with respect to the presence or absence of an obstacle in the monitoring area AR to the controller 9. The obstacle sensor 21 is an example of an obstacle detector according to the present invention.

The controller 9 inputs a notification instruction to the internal and external speakers 8A and 8B only when the operating state of the hydraulic excavator 1 satisfies a preset notification judgment condition. Each of the internal and external speakers 8A and 8B is configured to perform the notification, that is, a notification that the engine 5 is in a drive state, when the notification instruction is input.

The controller 9 includes a plurality of processing units. The plurality of processing units include an engine drive judgment unit 93 and a notification instruction unit 95 shown in FIG. 2, and a machine motion control unit that controls each of the plurality of machine motions.

The engine drive judgment unit 93 judges whether or not the engine 5 is being driven (i.e., whether or not the engine 5 is in a drive state).

The notification instruction unit 95 performs notification judgment processing of judging whether or not the notification instruction should be input to the internal and external speakers 8A and 8B, and input processing of performing the input when it is judged that the input should be done.

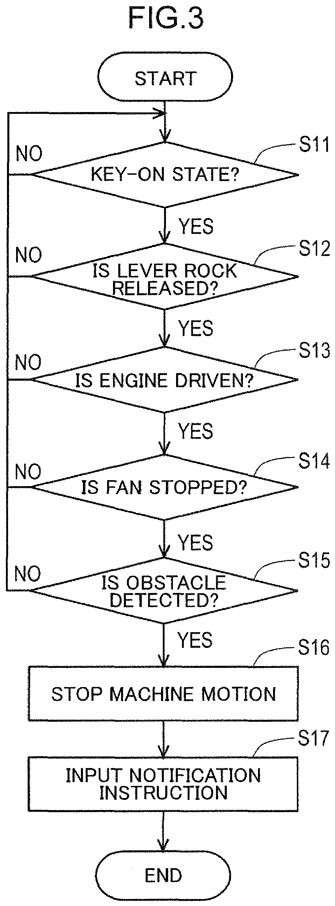

FIG. 3 is a flowchart showing processing performed by the controller 9 according to the first embodiment.

The notification instruction unit 95 of the controller 9 performs the notification judgment processing, that is, judges whether or not a plurality of notification judgment conditions set in advance, namely, the following conditions 1 to 5 in this embodiment, are satisfied (steps S11, S12, S13, S14, and S15).
Condition 1: The hydraulic excavator 1 is judged to be in a key-on state (YES in step S11).
Condition 2: The lock of the operation lever is released (YES in step S12).
Condition 3: The engine drive judgment unit 93 judges that the engine 5 is being driven (in a drive state) (prime mover drive condition; YES in step S13).
Condition 4: The fan 7 is stopped, that is, the rotational speed of the fan 7 is 0 (YES in step S14). The condition 4 is a fan drive sound condition that is set for judging that the drive sound generated in accordance with the drive of the fan 7 has a small volume (in the first embodiment, the drive sound has a volume of 0). The judgment on whether or not the condition 4 is satisfied can be made, for example, on the basis of whether or not the controller 9 outputs a fan drive instruction signal for instructing the rotational drive of the fan 7. Specifically, it is possible to judge that the fan 7 is stopped when the controller 9 outputs the drive instruction signal to the fan 7 and to judge that the fan 7 is being driven when the drive instruction signal is output.
Condition 5: The obstacle sensor 21 detects an obstacle in the monitoring area AR (obstacle detection condition; YES in step S15).

When the notification instruction unit 95 judges that all of Conditions 1 to 5 are satisfied, that is, all of the plurality of notification judgment conditions are satisfied (YES in steps S11 to S15), the machine motion control unit of the controller 9 forcibly stops at least one specific machine motion selected out of a plurality of machine motions including the motion of the work attachment 3, the turning motion of the upper turning body 2, and the traveling motion of the lower traveling body 10 (step S16). Furthermore, the notification instruction unit 95 inputs the above-described notification instruction to each of the internal and external speakers 8A and 8B (step S17). Receiving the input of the notification instruction, the internal and external speakers 8A and 8B perform respective notifications that the engine 5 is in a drive state, specifically, output an alarm sound, an alarm message and the like.

On the other hand, when any of the Conditions 1 to 5 is not satisfied (NO in any of steps S11 to S15), the notification instruction unit 95 performs neither forced stop of the specific machine motion nor any input of the notification instruction.

The volume of the alarm sound or the alarm message output from the internal and external speakers 8A and 8B may be either constant or varied. For example, each of the internal and external speakers 8A and 8B may have a function of automatically adjusting the volume of the alarm sound or the alarm message according to the situation of a work site or the like. Specifically, each of the internal and external speakers 8A and 8B may include a noise detector for measuring the volume of the ambient noise, configured to output an alarm sound or an alarm message with a volume greater than the volume of the noise measured by the noise detector. This prevents the alarm sound or the alarm message from being drowned by the noise without unnecessarily increasing the volume of the alarm sound or alarm message.

The controller 9 according to the first embodiment, configured to make the internal and external speakers 8A and 8B output an alarm sound (step S17) when the fan 7 is in the stopped state (YES in step S14 in FIG. 3), can bring an operator or a worker into recognition that the engine 5 is in a drive state even in a situation where the fan 7 is in a stopped state where the operator in the operation seat 40 or the worker around the machine cannot recognize the drive sound of the fan 7. Besides, performing no notification by an alarm sound or the like when the fan 7 is rotated to emit a drive sound can prevent unnecessary warning which imparts an uncomfortable or unpleasant feeling to the operator or the peripheral worker.

Furthermore, in addition to the output of the alarm sound and the output of the alarm message from the internal and external speakers 8A and 8B, forcibly stopped (inhibited) is a specific machine motion, that is, at least one machine motion selected out of a plurality of machine motions including the motion of the work attachment 3, the turning motion of the upper turning body 2, and the traveling motion of the lower traveling body 10 in the present embodiment (step S16 in FIG. 3), which allows higher safety to be secured.

Besides, the hydraulic excavator 1 according to the first embodiment, which includes the internal and external speakers 8A and 8B disposed in the interior and the exterior of the cab 4, respectively, as at least one notification unit, can notify both the operator in the operation seat 40 and the peripheral worker that the engine 5 is in a drive state.

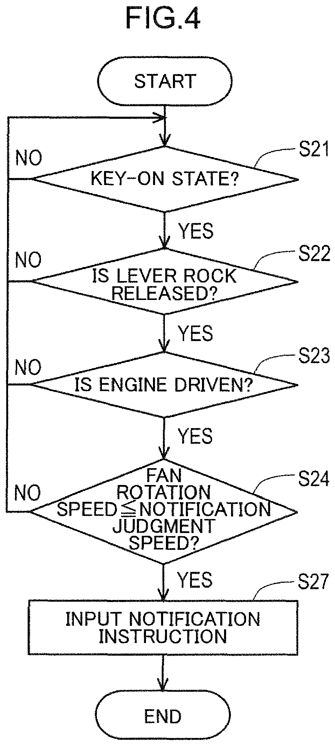

Next will be described a second embodiment with reference to FIG. 4. Below will be described only a different part from the first embodiment, and will be omitted the description about a common part.

While the fan 7 according to the first embodiment is driven by a drive source different from the engine 5, the second embodiment includes a fan 7 that is driven so as to interlock with the engine 5.

Besides, while the fan drive sound condition according to the first embodiment is that the fan 7 is in a stopped state, that is, the rotational speed of the fan 7 is 0, set in the second embodiment is a fan drive sound condition that the fan 7 is in a low speed rotation state, specifically, that the rotational speed of the fan 7 is equal to or less than a notification judgment speed which is set in advance to be greater than 0. The low speed rotation state, therefore, includes also a stopped state. In other words, the fan drive sound condition according to the first embodiment is a condition where the notification judgment speed is 0. In conclusion, according to the present invention, the notification judgment speed only has to be 0 or more.

FIG. 4 is a flowchart showing a processing performed by a controller 9 according to the second embodiment.

FIG. 4 also shows steps S21 to S23, which are equivalent to those of steps S11 to S13 shown in FIG. 3. Respective notification judgment conditions corresponding to the steps S21 to S23, therefore, are equivalent to the notification judgment conditions (Conditions 1 to 3) corresponding to the steps S11 to S13, respectively.

The controller 9 according to the second embodiment judges whether or not the rotational speed of the fan 7 detected by the fan rotation speed sensor 71 satisfies the condition that the rotational speed of the fan 7 detected by the fan rotation speed sensor 71 is equal to or less than the notification judgment speed (> 0), which is a condition corresponding to the step S14 in the first embodiment, namely, the fan drive sound condition that is set for judging that the sound volume of the drive sound of the fan 7 is small (step S24). The notification judgment speed is, for example, set to a limit value to allow an operator or a peripheral worker to recognize the drive sound of the fan 7. On the other hand, the controller 9 makes no judgment about the condition corresponding to the step S15, that is, the condition that the obstacle is detected. In other words, no condition about the detection of an obstacle is included in a plurality of notification judgment conditions according to the second embodiment.

Also the notification instruction unit 95 according to the second embodiment inputs a notification instruction to the internal and external speakers 8A and 8B in the same manner as in step S17 of FIG. 3 (step S27) only when all of the plurality of notification judgment conditions are satisfied (YES in steps S21 to S24). In this second embodiment, no processing of forcibly stopping each of the specific machine motions of the hydraulic excavator 1 is performed. Besides, the notification instruction unit 95 also inputs no notification instruction when any of the plurality of notification judgment conditions is not satisfied (NO in any of steps S21 to S24).

In the second embodiment, only when the condition that the rotational speed of the fan 7 is equal to or less than the notification judgment speed that is greater than 0 as the fan drive sound condition is satisfied (YES in step S24), that is, only when the fan 7 is in a low speed rotation state, a notification instruction input processing is performed for making the internal and external speakers 8A and 8B output an alarm sound and/or an alarm message. This enables an operator in the operation seat 40 and a worker in the periphery of the machine to recognize that the engine 5 is in a drive state, even in a situation where the volume of the drive sound of the fan 7 in a low speed rotation state is so small that the operator and the periphery worker can hardly recognize the drive sound of the fan 7. On the other hand, unnecessary notification can be prevented from being performed when the rotational speed of the fan 7 is high and the volume of the drive sound is large.

In the case where the fan drive sound condition is satisfied, that is, the rotational speed of the fan 7 is equal to or less than the notification judgment speed, in this second embodiment, the notification instruction unit 95 may be configured to input a notification instruction for outputting an alarm sound or an alarm message either to both the internal and external speakers 8A and 8B or only to one of the internal and external speakers 8A and 8B according to the situation. For example, in the case where the hydraulic excavator 1 further includes an operator sensor which is an operator detector that detects an operator sitting in the operation seat 40, the notification instruction unit 95 may be configured to input a notification instruction to the internal speaker 8A (internal speaker) to make the internal speaker 8A output an alarm sound and an alarm message therefrom to the inside of the cab 4 only when an operator detection condition that the operator is detected by the operator sensor is satisfied. Similarly, the notification instruction unit 95 may be configured to input a notification instruction to the external speaker 8B (external speaker) to make the external speaker 8B output an alarm sound and an alarm message therefrom to the outside of the cab 4 only when an obstacle detection condition that an obstacle (peripheral worker) is detected by the obstacle sensor 21 is satisfied. In other words, it is also possible that the plurality of notification judgment conditions include a detection condition that at least one of the operator detection condition and the obstacle detection condition is satisfied, in addition to the prime mover drive condition and the fan drive sound condition, and that the notification instruction unit 95 is configured to determine a notification unit to which the notification instruction should be input according to which of the operator detection condition and the obstacle detection condition is detected. This makes it possible to perform appropriate notification only to the notification target person who actually exists out of the operator in the operation seat 40 and the peripheral worker.

The notification instruction unit 95, alternatively, may be configured to input a notification instruction to the internal speaker 8A, when the peripheral worker is detected as an obstacle by the obstacle sensor 21, to make the internal speaker 8A output an alarm sound and an alarm message therefrom to an operator in the cab 4. This enables the operator in the cab 4 to recognize the presence of the peripheral worker.

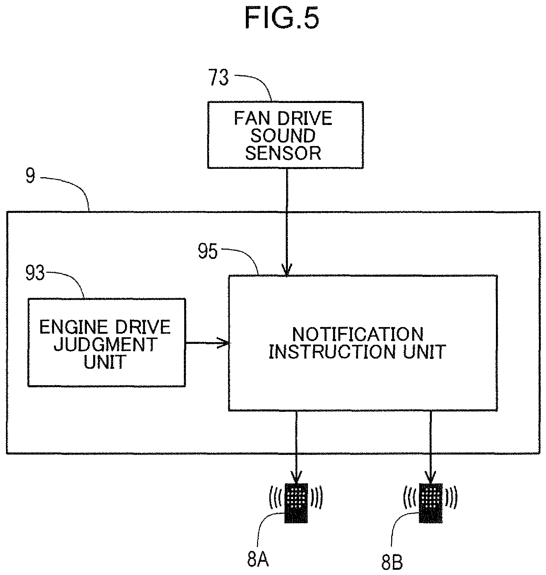

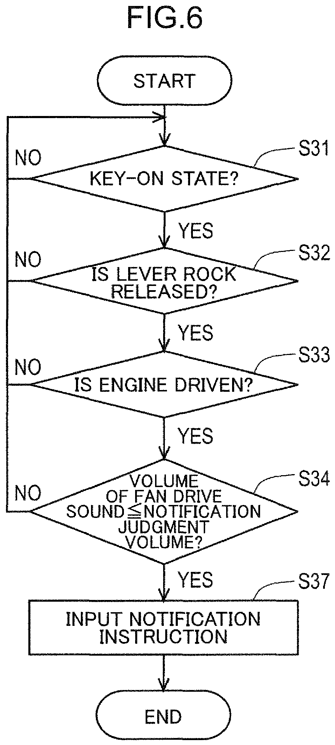

Next will be described a third embodiment with reference to FIGS. 5 and 6. Below will be described a different part from the second embodiment in the third embodiment, and will be omitted the description about the common part.

While the fan drive sound condition according to the second embodiment, that is, the condition set to judge that the drive sound of the fan 7 is small, is a condition that the rotational speed of the fan 7 detected by the fan rotation speed sensor 71 is equal to or less than the preset notification judgment speed, a fan drive sound condition according to the third embodiment is a condition that the volume of the actual drive sound of the fan 7 is equal to or less than a preset notification judgment volume.

Specifically, the hydraulic excavator 1 according to the third embodiment further includes a fan drive sound sensor 73 which is a drive sound detector that detects the volume of the drive sound of the fan 7. The fan drive sound sensor 73 is provided, for example, in the machine room. The fan drive sound sensor 73 inputs a detection signal with respect to the volume of the drive sound of the detected fan 7 to a controller 9.

FIG. 6 shows a processing performed by the controller 9 according to the third embodiment.

FIG. 6 shows steps S31 to S33, which are equivalent to the steps S11 to S13 shown in FIG. 3 and the steps S21 to S23 shown in FIG. 4, respectively. Respective notification judgment conditions corresponding to the steps S31 to S33, therefore, are equivalent to the notification judgment conditions corresponding to the steps S11 to S13, respectively, and equivalent to the notification judgment conditions corresponding to the steps S21 to S23, respectively.

The controller 9 according to the third embodiment judges whether or not the condition that the volume of the drive sound of the fan 7 actually detected by the fan drive sound sensor 73 is equal to or less than the notification judgment volume is satisfied (step S34), the condition being a condition corresponding to each of the steps S14 and S24 in the first and second embodiments, namely, the fan drive sound condition. The notification judgment volume is set to, for example, a limit value to allow an operator or a peripheral worker to recognize the drive sound of the fan 7. On the other hand, the controller 9 makes no judgment about a condition corresponding to the step S15, that is, the condition that an obstacle is detected. In other words, the obstacle detection condition is not included in the plurality of notification judgment conditions according to the second embodiment.

Also the notification instruction unit 95 according to the third embodiment inputs a notification instruction to the internal and external speakers 8A and 8B in the same manner as in step S17 of FIG. 3 and step S27 of FIG. 4 (step S37) when all of the plurality of notification judgment conditions are satisfied (YES in steps S31 to S34). Also in the third embodiment, no processing of forcibly stopping the specific machine motion of the hydraulic excavator 1 is performed. Besides, the notification instruction unit 95 also inputs no notification instruction when any of the plurality of notification judgment conditions is not satisfied (NO in any of steps S31 to S34).

In the third embodiment, only when the condition that the volume of the drive sound of the fan 7 is equal to or less than the notification judgment volume, namely, the fan drive sound condition, is satisfied (YES in step S34), a notification instruction input processing is performed for making the internal and external speakers 8A and 8B output an alarm sound and an alarm message therefrom (step S37). This enables an operator in the operation seat 40 and a peripheral worker to recognize that the engine 5 is in a drive state, even in a situation where the volume of the drive sound is so small that the operator and the peripheral worker can hardly recognize the drive sound. On the other hand, unnecessary notification can be prevented from being performed when the volume of the drive sound of the fan 7 is large.

The present invention is not limited to the above-described embodiments but allows various modifications or improvements to be made within the scope of the appended claims.

### (Notification)

The at least one notification unit according to the present invention may be one including only a single notification unit, for example, only one of the internal and external speakers 8A and 8B according to the first to third embodiments. Besides, it is not limited to one performing a sound-based auditory notification one such as the internal and external speakers 8A and 8B. The notification unit according to the present invention may be also one that performs a visual notification by use of light, for example, a lighting unit. The notification unit that performs such a visual notification also can be installed in any of the interior and the exterior of the cab 4 in the same manner as the internal and external speakers 8A and 8B.

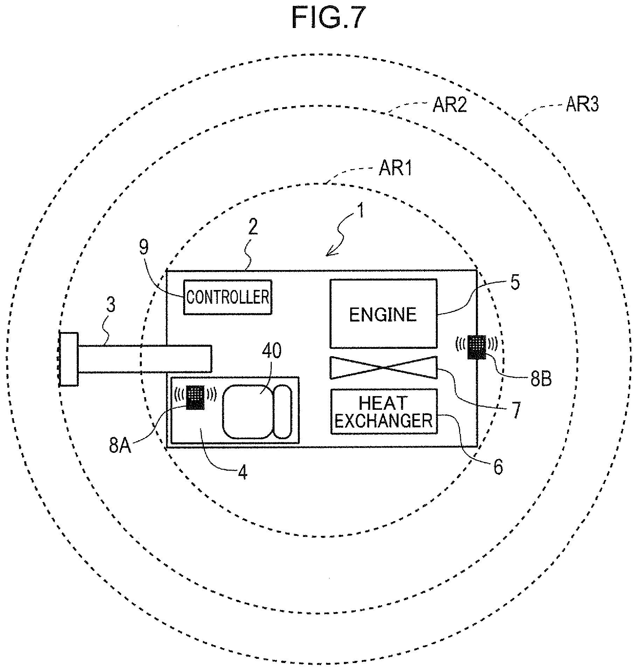

The visual notification of such light as described above is performed, preferably, with changing the lighting color according to the position of a peripheral worker. FIG. 7 shows an example of dividing a monitoring area AR set around the hydraulic excavator 1 into a first monitoring area AR1, a second monitoring area AR2, and a third monitoring area AR3 for making the lighting colors correspond to the positions of the peripheral worker. The first monitoring area AR1 corresponds to, for example, a turning area of the rear end of the upper turning body 2. The second monitoring area AR2, which is an area on the outer side of the first monitoring area AR1, corresponds to, for example, a turning area of the work attachment 3. The third monitoring area AR3 is an area on the outer side of the second monitoring area AR2.

To the first to third monitoring areas AR1 to AR3 are assigned different lighting colors. For example, the lighting color of green is assigned to the case where the presence area in which a worker in the periphery of the machine detected by the obstacle sensor 21 is present is the third monitoring area AR3; the lighting color of yellow is assigned to the case where the presence area is the second monitoring area AR2; and the lighting color of red is assigned to the case where the presence area is the first monitoring area AR1. Thus making the lighting colors correspond to the monitoring area causes the lighting color to be changed along with the approach of the operator to the upper turning body 2 (in this example, a change from green to yellow and further red in this order), thereby enabling the operator to intuitively grasp the degree of necessity of cautiousness.

The division of the monitoring area AR can be effectively applied to not only a mode where the notification unit is a lighting unit but also other modes including internal and external speakers 8A and 8B such as the embodiments. Specifically, it is effective to change the pattern of the alarm sound or the content (wording) of the alarm message in correspondence to the first, second and third monitoring areas AR1, AR2, and AR3.

The obstacle sensor 21 or the controller 9, if having a function of identifying whether or not the obstacle detected by the obstacle sensor 21 is a worker (human), can allow different notifications to be effectively performed in accordance with the result of the identification. For example, performing red lighting when the detected obstacle is a worker (human), performing yellow lighting when the detected obstacle is not a worker (human) and performing green lighting when nothing is detected enable an operator to recognize whether or not the detected object is a worker. The identification on whether or not the detected object is a worker (human) can be made by use of, for example, a known face recognition technique.

In addition, also can be included another aspect in which respective areas corresponding to the first, second and third monitoring areas AR1, AR2, and AR3 are displayed on the ground by use of projection mapping technique or the like.

Changing visual notification is not limited to the above-described change in the lighting color of the lighting unit. For example, it may be a change in the flashing pattern or a combination of a change in the lighting color and a change in the lighting pattern.

Furthermore, can be also performed a combination of auditory notification and visual notification. For example, in a mode in which the hydraulic excavator 1 includes both the internal and external speakers 8A and 8B and the lighting unit, the notification instruction unit 95 may be configured to make the lighting unit perform notification when ambient noise is large or the like and to make the inside and external speakers 8A and 8B perform notification when external light is strong or the like.

The selection between the visual notification and the auditory notification may be performed according to the time zone, the status of the work site, or the like. For example, during a work in a night time or in the vicinity of residential area, in which the notification by sound from the internal and external speakers 8A and 8B can be annoying, it is preferable to select visual notification by, for example, the lighting unit.

### (Prime Mover)

The prime mover according to the present invention is not limited to the engine 5 according to each of the above embodiments. The prime mover may be, for example, an electric motor installed in an electric excavator or a hybrid excavator (electric-hydraulic excavator).

### (Judgment on Drive State of Fan)

The judgment on whether or not the fan according to the present invention is in a drive state is not limited to one based on the presence or absence of the output of the fan drive instruction signal from the controller 9 as in the first embodiment. The judgment may be made, for example, based on the rotational speed of the fan 7 detected by the above-described fan rotation speed sensor 71. Specifically, it is possible to judge the fan 7 to be in a stopped state when the rotational speed of the fan 7 is 0 and to judge the fan 7 to be driven when the rotational speed of the fan 7 is equal to or more than a certain value larger than 0.

### (Detection of Obstacle)

In the case where the plurality of notification judgment conditions according to the present invention include a condition of detection of an obstacle, the detection of the obstacle is not limited to one performed by the obstacle sensor 21 according to the first embodiment. The detection can be also performed, for example, by applying known image processing techniques to a captured image by an imaging device such as a camera. The obstacle detection condition can be set only as a condition for stopping the specific machine motion, not included in the plurality of notification judgment conditions. In other words, the controller according to the present invention may be configured to forcibly stop the specific machine motion while making no input of the notification instruction, when the obstacle detection condition is satisfied.

The "plurality of notification judgment conditions" according to the present invention only has to include at least a prime mover drive condition and a fan drive sound condition. The condition other than the prime mover drive condition and the fan drive sound condition disclosed in the first to the third embodiments (for example, the conditions 1 and 2) may be omitted as appropriate.

As described above, there is provided a construction machine including a prime mover and a fan, the construction machine being capable of accurately notifying a worker that the prime mover is in a drive state.

Provided is a construction machine comprising: a prime mover; a heat exchanger; a fan that is rotationally driven to blow air to the heat exchanger; at least one notification unit that is operated to notify that the prime mover is in a drive state by input of a notification instruction to the at least one notification unit; and a controller that inputs the notification instruction to the at least one notification unit only when all of a plurality of preset notification judgment conditions are satisfied. The plurality of notification judgment conditions include a prime mover drive condition that the prime mover is in a drive state and a fan drive sound condition that is preset to judge that a volume of a drive sound generated by driving the fan is small.

It is preferable that the construction machine further comprises a rotational speed detector that detects the rotational speed of the fan, wherein the fan drive sound condition is a condition that the rotational speed of the fan detected by the rotational speed detector is equal to or less than a preset notification judgment speed.

Alternatively, it is also preferable that the construction machine further comprises a drive sound detector that detects a volume of a drive sound which is a sound generated by driving the fan, wherein the fan drive sound condition is a condition that the volume of the drive sound detected by the drive sound detector is equal to or less than a preset notification judgment volume.

The fan drive sound condition, alternatively, may be that the fan is in a stopped state, that is, the rotational speed of the fan is zero. The judgment on whether or not such a condition is satisfied can be made, for example, based on whether or not a fan drive instruction for instructing the drive of the fan is output, or based on the rotational speed of the fan detected by the rotation speed detector.

Preferably, the construction machine further comprises an obstacle detector that detects an obstacle being present in a monitoring area set around the construction machine, wherein the plurality of notification judgment conditions further include an obstacle detection condition that the obstacle is detected by the obstacle detector, and wherein the controller is configured to forcibly stop at least one specific machine motion selected from a plurality of machine motions to be performed by the construction machine when the obstacle detection condition is satisfied and configured to input the notification instruction to the at least one notification unit when all of the prime mover drive condition, the fan drive sound condition and the obstacle detection condition are satisfied.

In the case where the construction machine further comprises a cab including an operation seat that allows an operator to sit in the operation seat, the at least one notification unit preferably includes an internal notification unit disposed inside the cab to notify the operator sitting in the operation seat and an external notification unit disposed to notify a worker outside the cab.

In this case, it is preferable that the construction machine further comprises an obstacle detector that detects an obstacle being present in a monitoring area set around the construction machine, and an operator detector that detects presence or absence of the operator in the operation seat, wherein: the plurality of notification judgment conditions further include a detection condition that one of an operator detection condition that the operator is detected by the operator detector and an obstacle detection condition that the obstacle is detected is satisfied, and wherein the controller is configured to input the notification instruction to the internal notification unit when the operator detection condition is satisfied and configured to input the notification instruction to the external notification unit when the obstacle detection condition is satisfied.

Alternatively, it is also possible that the at least one notification unit includes an internal notification unit installed inside the cab and the controller is configured to input the notification instruction to the internal notification unit when the obstacle detector detects the obstacle.

Preferably, the at least one notification unit is a speaker capable of performing notification by sound and adjusting a volume of the sound, the speaker including a noise detector that detects a volume of ambient noise and configured to notify with a volume greater than the volume of the noise detected by the noise detector.

## Claims

1. A construction machine comprising:
a prime mover;
a heat exchanger;
a fan that is rotationally driven to blow air to the heat exchanger;
at least one notification unit that is operated to notify that the prime mover is in a drive state by input of a notification instruction to the at least one notification unit; and
a controller that inputs the notification instruction to the at least one notification unit only when all of a plurality of preset notification judgment conditions are satisfied, the plurality of notification judgment conditions including a prime mover drive condition that the prime mover is in a drive state and a fan drive sound condition that is preset to judge that a volume of a drive sound generated by driving the fan is small.

2. The construction machine according to claim 1, further comprising a rotational speed detector that detects a rotational speed of the fan, wherein the fan drive sound condition is a condition that the rotational speed of the fan detected by the rotational speed detector is equal to or less than a preset notification judgment speed.

3. The construction machine according to claim 1, further comprising a drive sound detector that detects a volume of a drive sound of the fan, wherein the fan drive sound condition is a condition that the volume of the drive sound detected by the drive sound detector is equal to or less than a preset notification judgment volume.

4. The construction machine according to claim 1, wherein the fan drive sound condition is a condition that the fan is in a stopped state.

5. The construction machine according to any one of claims 1 to 4, further comprising an obstacle detector that detects an obstacle being present in a monitoring area set around the construction machine, wherein the plurality of notification judgment conditions further include an obstacle detection condition that the obstacle is detected by the obstacle detector, and wherein the controller is configured to forcibly stop at least one specific machine motion selected from a plurality of machine motions to be performed by the construction machine when the obstacle detection condition is satisfied and configured to input the notification instruction to the at least one notification unit only when all of the prime mover drive condition, the fan drive sound condition and the obstacle detection condition are satisfied.

6. The construction machine according to claim 1, further comprising a cab including an operation seat that allows an operator to sit in the operation seat, wherein the at least one notification unit includes an internal notification unit disposed inside the cab to perform the notification to an operator sitting in the operation seat and an external notification unit disposed to perform the notification to a worker outside the cab.

7. The construction machine of claim 6, further comprising an obstacle detector that detects an obstacle being present in a monitoring area set around the construction machine and an operator detector that detects an operator sitting in the operation seat, wherein the plurality of notification judgment conditions further include a detection condition that one of an operator detection condition that the operator is detected by the operator detector and an obstacle detection condition that the obstacle is detected by the obstacle detector is satisfied, and wherein the controller is configured to input the notification instruction to the internal notification unit when the operator detection condition is satisfied and configured to input the notification instruction to the external notification unit when the obstacle detection condition is satisfied.

8. The construction machine according to claim 5, further comprising a cab including an operation seat that allows an operator to sit in the operation seat, wherein the at least one notification unit includes an internal notification unit disposed inside the cab to perform the notification to an operator sitting in the operation seat, and wherein the controller is configured to input the notification instruction to the internal notification unit when the obstacle detection condition is satisfied.

9. The construction machine according to any one of claims 1 to 8, wherein the at least one notification unit is a speaker capable of performing notification by sound and adjusting a volume of the sound, the speaker including a noise detector that detects a volume of ambient noise and configured to notify with a volume greater than the volume of the noise detected by the noise detector.
